# EUROPÄISCHE PATENTSCHRIFT

(11) **EP 0 617 715 B1**
(45) Veröffentlichungstag und Bekanntmachung des Hinweises auf die Patenterteilung: **17.04.1996**
(21) Anmeldenummer: 93900101.2
(22) Anmeldetag: 17.12.1992
(51) Int. Cl.: C08K 3/00, C09J 131/04, D21H 19/20

(54) **VERWENDUNG WÄSSRIGER BINDEMITTELZUSAMMENSETZUNGEN ZUR LAMINIERUNG VON CELLULOSE-TISSUEGEWEBEN**
UTILIZATION OF AQUEOUS BINDER COMPOSITIONS FOR THE LAMINATION OF CELLULOSE-TISSUE
UTILIZATION DES COMPOSITIONS AQUEUSES DE LIANT POUR LAMINER DES TISSUES SUR BASES DE CELLULOSE

(30) Priorität: 20.12.1991 DE 4142460
(43) Veröffentlichungstag der Anmeldung: 05.10.1994
(73) Patentinhaber: WACKER-CHEMIE GMBH, D-81737 München (DE)
(72) Erfinder: WIERER, Konrad Alfons, Dr., D-84561 Mehring (DE); BRINK, Gerhard, Dr., D-84489 Burghausen (DE)
(86) Internationale Anmeldenummer: EP9202933
(87) Internationale Veröffentlichungsnummer: WO9313165

(56) Entgegenhaltungen:
- DE-A- 2 243 687
- US-A- 4 735 986
- SEIFEN-ÖLE-FETTE-WACHSE Bd. 91, Nr. 16, 1965, AUGSBURG Seiten 545-549 HADERT 'Polyvinylacetat als Klebstoff-Rohstoff'

## Beschreibung

Die Erfindung betrifft die Verwendung einer wäßrigen Bindemittelzusammensetzung zur Laminierung von zwei oder mehreren Lagen von Tissuegeweben.

Die Laminierung von Tissuegeweben, zum Beispiel auf der Basis von Cellulose-Fasern, wird zur Herstellung von Papiertischtüchern oder Papierservietten eingesetzt. Als Bindemittel werden dazu üblicherweise Plastisole verwendet, beispielsweise Gemische von Vinylchloridpolymerisaten mit Weichmachern. Die einzelnen Tissuelagen werden dazu mit dem Plastisol beschichtet und auf einer schnellaufenden Laminieranlage laminiert. Nachteilig bei der Verwendung von Plastisolen sind die bei der Herstellung zwangsläufig auftretenden Emissionen von Weichmacher bzw. Lösungsmittel. Ein weiterer Nachteil, speziell bei der Verwendung von Plastisolen auf PVC-Basis, ist der hohe Chloranteil im Produkt.

Eine weitere Möglichkeit zur Laminierung von Tissuegeweben besteht in der Verwendung von Pulvern thermoplastischer Polymere als Bindemittel. Nachteilig ist dabei die geringe Festigkeit des Laminats. Im nassen Zustand lösen sich die einzelnen Lagen leicht voneinander ab.

Der Erfindung lag die Aufgabe zugrunde, eine Bindemittelzusammensetzung zur Herstellung von Cellulose-Tissuelaminaten zur Verfügung zu stellen, mit der Laminate mit hoher mechanischer Festigkeit, weichem Griff und hohem Flächengewicht zugänglich werden, ohne daß dabei die Nachteile der bisher verwendeten Plastisol-Bindemittel (Lösungsmittel- bzw. Weichmacher-Emission) oder pulverförmigen Bindemittel auftreten.

Überraschenderweise konnte die Aufgabe mit einer wäßrigen Bindemittelzusammensetzung gelöst werden, trojz der bekannten Schwierigkeiten bei der Verarbeitung von Cellulose-Tissues mit geringer Naßfestigkeit.

Gegenstand der Erfindung ist die Verwendung einer wäßrigen Bindenittelzusammensetzung zur Laminierung von zwei oder mehreren Lagen von Cellulose-Tissuegeweben mit einem Flächengewicht von 18 bis 25g/m, dadurch gekennzeichnet, daß eine wäßrige Bindemittelzusammensetzung mit einer Viskosität von 600 bis 35000 mPa.s verwendet wird, enthaltend
a) 10 bis 80 Gewichtsteile einer wäßrigen Kunststoffdispersion mit einem Festgehalt von 30 bis 70 Gew% auf der Basis von Polymerisaten eines oder mehrerer Monomeren aus der Gruppe der Acrylsäureester, Methacrylsäureester, Vinylester, Olefine, Vinylhalogenide, Vinylaromate, ethylenisch ungesättigten Carbonsäuren und deren Amide, welche gegebenenfalls 0 bis 10 Gew%, bezogen auf das Gesamtgewicht des Polymerisats, N-Alkylamide und/oder N-Alkoxyalkylamide ethylenisch ungesättigter Carbonsäuren enthalten,
b) 0.1 bis 300 Gewichtsteile eines organischen oder anorganischen Füllstoffs mit geringer Wasserlöslichkeit und einer mittleren Korngröße von 0.5 bis 100 µm, und
c) 0 bis 4 Gewichtsteile eines Verdickungsmittels und/oder 0 bis 6 Gewichtsteile eines Dispergiermittels.

Bevorzugte Acrylsäureester sind die Ester von Alkoholen mit 1 bis 10 Kohlenstoffatomen, wie Methylacrylat, Ethylacrylat, Propylacrylat, Butylacrylat, 2-Ethylhexylacrylat oder Laurylacrylat.

Bevorzugte Methacrylsäureester sind die Ester von Alkoholen mit 1 bis 10 Kohlenstoffatomen, wie Methylmethacrylat, Ethylmethacrylat, Propylmethacrylat, Butylmethacrylat, 2-Ethylhexylmethacrylat oder Laurylmethacrylat.

Bevorzugt zu nennende Vinylester sind die Ester von Alkylcarbonsäuren mit 1 bis 15 C-Atomen, wie Vinylacetat, Vinylpropionat, Vinylbutyrat, Vinyl-2-ethylhexanoat, Vinyllaurat, Versaticsäure^{R}-Vinylester (beispielsweise VeoVa9^{R} oder VeoVa10^{R}, Vinylester von α-verzweigten Monocarbonsäuren mit 9 bzw. 10 C-Atomen, Handelsprodukte der Fa. Shell) oder 1-Methylvinylacetat (Isopropenylacetat).

Geeignete Olefine sind Ethylen, Propylen oder Butadien. Als Vinylhalogenide werden vorzugsweise Vinylchlorid oder Vinylidenchlorid eingesetzt. Bevorzugte Vinylaromate sind Styrol oder Vinyltoluol.

Beispiele für ethylenisch ungesättigte Carbonsäuren und deren Amide sind Acrylsäure, Methacrylsäure, Itakonsäure, Fumarsäure, Maleinsäure, sowie deren Monoamide und Diamide. Insbesonders Acrylsäure, Methacrylsäure, Acrylsäureamid und Methacrylsäureamid.

Bevorzugte N-Alkylamide und/oder N-Alkoxyalkylamide ethylenisch ungesättigter Carbonsäuren sind N-Methylolacrylamid, N-Methylolmethacrylamid oder N-(isobutoxymethyl)-acrylamid bzw. N-(isobutoxymethyl)-methacrylamid.

Als Bindemittel besonders geeignet sind wäßrige Dispersionen von Vinylacetat-Ethylen-Copolymerisaten, Vinylacetat-Ethylen-N-Methylol(meth)acrylamid-Terpolymerisaten, Alkylacrylat-N-Methylol(meth)acrylamid-Copolymerisaten und Vinylacetat-Ethylen-Alkylacrylat-Mischpolymerisaten oder Vinylacetat-Alkylacrylat-Mischpolymerisaten, die gegebenenfalls einen N-Methylol(meth)acrylamid-Anteil aufweisen.

Am meisten bevorzugt werden Vinylacetat-Ethylen-Copolymerisate mit einem Vinylacetat-Gehalt von 60 bis 90 Gew% und einem Ethylengehalt von 10 bis 40 Gew%, bezogen auf das Gesamtgewicht des Copolymerisats, sowie Vinylacetat-Ethylen-N-Methylolacrylamid-Terpolymerisate mit einem Vinylacetat-Gehalt von 60 bis 90 Gew%, einem Ethylengehalt von 10 bis 40 Gew% und einem N-Methylolacrylamid-Gehalt von 1 bis 10 Gew%, bezogen auf das Gesamtgewicht des Terpolymerisats, wobei sich die Angaben in Gewichtsprozent auf 100 Gew% aufaddieren.

Vorzugsweise haben die wäßrigen Kunststoffdispersionen einen Festgehalt von 45 bis 55 Gew%. Der Anteil der Kunststoffdispersion in der Bindemittelzusammensetzung beträgt vorzugsweise 40 bis 60 Gewichtsteile.

Die Herstellung der wäßrigen Copolymerisatdispersionen erfolgt vorzugsweise nach dem Emulsionspolymerisationsverfahren und wird in den üblichen Polymerisationsgefäßen durchgeführt. Die Polymerisation kann diskontinuierlich oder kontinuierlich, mit oder ohne Verwendung von Saatlatices, unter Vorlage aller oder einzelner Bestandteile des Reaktionsgemisches oder unter teilweiser Vorlage und Nachdosierung der oder einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

Die Emulsionspolymerisation wird in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide eingesetzt werden. Beispiele hierfür sind Polyvinylalkohole, Cellulosederivate oder Dextrine.

Um die Bindekraft des Harzes vollständig zu nutzen und um ein höheres Auftragsgewicht bei der Laminierung zu erhalten, enthält die Bindemittelzusammensetzung 0.1 bis 300, vorzugsweise 10 bis 100, Gewichtsteile organische oder anorganische Füllstoffe. Die Füllstoffe sollten unbedenklich für Berührung mit Lebensmitteln oder menschlicher Haut sein, leicht dispergierbar sein und über einen hohen Weißgrad verfügen, vorzugsweise > 93 (nach DIN 53163). Bei Grautönen ist der Zusatz von Titandioxid günstig.

Geeignete organische Füllstoffe sind Holzmehl, Baumwolllinters, Cellulose, Polyethylen-, Polypropylen-, Polyamid- oder Polyester-Pulver. Geeignete anorganische Füllstoffe sind natürliche oder synthetische Silikate wie Mg-Ca-Al-Silikate, Kieselgur, Quarzmehl, Feldspate, Talkum, Kaolin oder Glimmer (Diatomeerde); natürliche oder gefällte Carbonate wie Kreide oder Dolomit; natürliche oder gefällte Sulfate wie Gips, Ca-Sulfat, Mg-Sulfat oder Ba-Sulfat (Schwerspat); Oxide und Hydroxide wie Titanoxid, Ca-Oxid, Mg-Oxid, Zn-Oxid, Mg-Hydroxid oder Al-Hydroxid.

Bevorzugte Füllstoffe sind Kreide, Dolomit und Schwerspat. Die Füllstoffe müssen über einen hohen Mahlgrad (kleine Korngröße) verfügen. Für den Hauptanteil des Füllstoffs liegt die Korngröße vorzugsweise zwischen 0.5 bis 20 µm, wobei ein geringer Grobanteil nicht störend wirkt. Darüber hinaus sind die Füllstoffe in der erfindungsgemäßen Bindemittelzusammensetzung kaum in Wasser löslich, vorzugsweise zu Anteilen kleiner als 0.2 Gew%.

Mitentscheidend für eine problemlose Laminierung ohne Quellung der Tissues, unter Vermeidung des Abreißens der Tissuebahn und zum Erreichen der gewünschten Auftragsmenge auf das Tissue ist die richtige Einstellung der Viskosität. Die Viskosität der Bindemittelzusammensetzung beträgt 600 bis 35000 mPa·s, vorzugsweise 800 bis 1800 mPa·s.

Abhängig vom Füllstoffanteil und vom Feststoffgehalt der Kunststoffdispersion in der Bindemittelzusammensetzung muß zur Einstellung des beanspruchten Viskositätsbereichs die Viskosität erhöht bzw. erniedrigt werden. Zur Erhöhung der Viskosität kann der Bindemittelzusammensetzung ein Verdickungsmittel mit wasserrückhaltender Wirkung zugesetzt werden. Aufgrund der wasserretendierenden Wirkung wird durch das Verdickungsmittel das Wasser im Bindemittel zurückgehalten und bei der Laminierung die Abwanderung des Bindemittelwassers in das Tissue verzögert. Zur Erniedrigung der Viskosität kann der Bindemittelzusammensetzung ein Dispergiermittel zugesetzt werden, welches, neben der Dispergierung und Stabilisierung des Füllstoffes in der Bindemmittelzusammensetzung, insbesonders bei hohem Füllstoffanteil und bei stark verdickend wirkenden Füllstoffen (z.B. Kaolin), die Viskosität deutlich erniedrigt.

Geeignete Verdickungsmittel sind insbesondere solche, die einen thixotropen Charakter der Dispersion bewirken. Beispiele hierfür sind Polyacrylsäuren und deren Salze, lösliche Cellulosederivate wie Hydroxyethylcellulose, Alginate oder Polyurethane. Vorzugsweise werden Polyacrylsäuren und deren Salze bei einem pH kleiner 5 eingesetzt. Üblicherweise werden bis zu 4 Gewichtsteile, vorzugsweise 0.01 bis 0.1 Gewichtsteile, Verdickungsmittel in der Bindemittelzusammensetzung eingesetzt.

Zur Viskositätseinstellung geeignete Dispergiermittel sind beispielsweise Kalium-, Natrium- oder Ammoniumsalze von polymeren Carboxylsäuren. Das Dispergiermittel wird in Mengen bis zu 6 Gewichtsteilen, vorzugsweise von 0.1 bis 1.0 Gewichtsteilen, der Bindemittelzusammensetzung zugesetzt.

Zur speziellen Ausrüstung von Tissuelaminaten kann die Bindemittelzusammensetzung noch Hydrophobierungsmittel, Flammschutzmittel oder Weichmacher enthalten. Geeignete Hydrophobierungsmittel sind solche auf der Basis von Fluorcarbonen oder Silikonen, welche in einer Menge von 0.01 bis 1.0 Gew%, bezogen auf das Laminat, zugesetzt werden können. Geeignete Flammschutzmittel sind solche auf der Basis von polymeren Stickstoff-Phosphor-Verbindungen, beispielsweise Ammoniumpolyphosphat, in einer Menge von 5 bis 200 Gew%, bezogen auf den Kunststoffanteil in der Bindemittelzusammensetzung. Als Weichmacher, zur Verstärkung des weichen und geschmeidigen Griffs der Tissuelaminate, eignen sich beispielsweise aminofunktionelle Silikonöle in einer Menge von 0.2 bis 5.0 Gew%, bezogen auf den Kunststoffanteil, oder Alkylphthalate in einer Menge von 1.0 bis 20 Gew%, bezogen auf den Kunststoffanteil in der Bindemittelzusammensetzung.

Zur Unterdrückung der Schaumbildung beim Mischen und bei der Laminierung empfiehlt sich die Zugabe eines Entschäumungsmittels, beispielsweise auf der Basis von höheren Alkoholen oder Silikonölen, zur Bindemittelzusammensetzung.

Bevorzugte Bindemittelzusammensetzungen haben eine Viskosität von 800 bis 1800 mPa·s, einen Feststoffanteil von mehr als 70 Gew% und enthalten
a) 40 bis 60 Gewichtsteile einer wäßrigen Kunststoffdispersion mit einem Festgehalt von 45 bis 55 Gew%. auf der Basis von Vinylacetat-Ethylen-Copolymerisaten, Vinylacetat-Ethylen-N-Methylol(meth)acrylamid-Terpolymerisaten, Alkylacrylat-N-Methylol(meth)acrylamid-Copolymerisaten und Vinylacetat-Ethylen-Alkylacrylat-Mischpolymerisaten oder Vinylacetat-Alkylacrylat-Mischpolymerisaten, die gegebenenfalls einen N-Methylol(meth)acrylamid-Anteil aufweisen,
b) 10 bis 100 Gewichtsteile Kreide, Dolomit oder Schwerspat mit einer Korngröße von 1 bis 20 µm und einer Wasserlöslichkeit kleiner 0.2 Gew%, und gegebenenfalls
c) 0.01 bis 0.1 Gewichtsteile Verdickungsmittel auf der Basis von Polyacrylsäuren und deren Salze bei einem pH kleiner 5 und/oder
   0.1 bis 1.0 Gewichtsteile Dispergiermittel auf der Basis der Kalium-, Natrium- oder Ammoniumsalze von polymeren Carboxylsäuren.

Am meisten bevorzugt sind Bindemittel der ebengenannten Zusammensetzung, welche als Komponente a) Vinylacetat-EthylenCopolymerisate mit einem Vinylacetat-Gehalt von 60 bis 90 Gew% und einem Ethylengehalt von 10 bis 40 Gew%, bezogen auf das Gesamtgewicht des Copolymerisats, enthalten oder Vinylacetat-Ethylen-N-Methylolacrylamid-Terpolymerisate mit einem Vinylacetat-Gehalt von 60 bis 90 Gew%, einem Ethylengehalt von 10 bis 40 Gew% und einem N-Methylolacrylamid-Gehalt von 1 bis 10 Gew%, bezogen auf das Gesamtgewicht des Terpolymerisats, enthalten.

Zur Herstellung der Bindemittelzusammensetzung wird vorzugsweise die wäßrige Kunststoffdispersion vorgelegt und der Entschäumer, gegebenenfalls zusammen mit einem Dispergiermittel, eingerührt. Anschließend wird chargenweise unter starkem Rühren der pulvrige Füllstoff zugemischt. Falls der Füllstoff zum Klumpen neigt, kann er gegebenenfalls vor der Zugabe angeteigt werden. Zum Schluß wird durch Zugabe von Dispergiermittel bzw. Verdickungsmittel die Viskosität eingestellt.

Die erfindungsgemäße Bindemittelzusammensetzung eignet sich speziell zur Laminierung von Tissuegeweben. Solche Tissues sind üblicherweise naßgelegt aus Cellulose-Pulp oder Fasern, haben ein Flächengewicht von 15 bis 50 g/m, vorzugsweise 18 bis 25 g/m, und können mit Naßfestmittel leicht gebunden sein.

Die Herstellung der Tissuelaminate unter Verwendung der erfindungsgemäßen Bindemittelzusammensetzung wird vorzugsweise in einem mehrstufigen Verfahren durchgeführt, bei dem im ersten Schritt eine oder zwei Tissuelagen mit der wäßrigen Bindemittelzusammensetzung beschichtet werden und in den nachfolgenden Verfahrensschritten jeweils eine weitere Tissuelage nach Beschichtung des Vorlaminats aufkaschiert wird.

Im ersten Verfahrensschritt zur Herstellung eines zweilagigen Vorlaminats wird die erfindungsgemäße Bindemittelzusammensetzung, gegebenenfalls ohne Füllstoffanteil, beispielsweise durch Sprühen, Rotationssiebdruck oder mittels einer Gravurwalze auf ein einlagiges Tissue aufgetragen. Der Auftrag erfolgt vorzugsweise nicht vollflächig, in einer Menge von 5 bis 15 g/m. Nach der Auftragung des Binders wird ein weiteres einlagiges Tissue auflaminiert und das Vorlaminat getrocknet. Nach der Trocknung werden auf das zweilagige Vorlaminat weitere 20 bis 80 g/m Bindemittelzusammensetzung, beispielsweise mit einem Rotationssieb oder einer Walze, aufgetragen und eine weitere Lage Tissue auflaminiert. Abschließend wird das Laminat, vorzugsweise über eine Gelierwalze, getrocknet.

Eine weitere Möglichkeit zur Herstellung von Tissuelaminaten unter Verwendung der erfindungsgemäßen Bindemittelzusammensetzung besteht darin, die erste Charge des Bindemittels mittels eines Streichrakels auf ein Silikon-Releasepapier aufzutragen. In den Dispersionsfilm wird ein ein- oder zweilagiges Tissue eingelegt und anschließend getrocknet. Nach der Trocknung wird das Vorprodukt vom Releasepapier abgetrennt und auf die klebrige Seite des Vorprodukts eine Tissuelage aufkaschiert.

Mit der erfindungsgemäßen Bindemittelzusammensetzung werden damit Laminate zugänglich, die bezüglich Weichheit, Drapierfähigkeit und Faltenbildung den mit Plastisol gebundenen Tissuelaminaten zumindest ebenbürtig sind, ohne daß die bereits beschriebenen Nachteile in Kauf genommen werden müssen. Vor allem jedoch verfügen die Laminate über deutlich höhere Naßfestigkeit.

Die nachfolgenden Beispiele dienen zur weiteren Erläuterung der Erfindung.

### Herstellung der Bindemittelzusammensetzung:

### Beispiel 1:

50 Gewichtsteile einer wäßrigen Kunststoffdispersion mit einem Festgehalt von 52 Gew% auf der Basis eines Terpolymeren mit 70 Gew% Vinylacetat, 25 Gew% Ethylen und 5 Gew% N-Methylolacrylamid wurden vorgelegt und 0.2 Gewichtsteile eines Ammoniumsalzes einer Polycarboxylsäure sowie 0.033 Gewichtsteile eines Silikon-Entschäumers unter Rühren zugegeben. Danach wurden 37 Teile Schwerspat mit einer mittleren Teilchengröße von 1 µm zugegeben. Zum Schluß wurden noch 0.033 Gewichtsteile Polyacrylsäure zugegeben. Es resultierte ein Bindemittel mit einem Feststoffgehalt von 76 Gew% und einer Viskosität von 1500 mPa·s (Brookfield 20 UpM, 20°C). Der pH-Wert wurde auf 4.5 eingestellt.

### Beispiel 2:

Analog Beispiel 1 wurde ein Bindemittel hergestellt, zusammengesetzt aus:
56 Gewichtsteilen der Kunststoffdispersion aus Beispiel 1, 44 Gewichtsteilen Gips mit einer mittleren Teilchengröße von 10 µm, 0.1 Gewichtsteilen eines Ammoniumsalzes einer Polycarboxylsäure und 0.033 Gewichtsteilen Silikon-Entschäumer. Es wurde ein pH-Wert von 4.5 eingestellt. Die Zusammensetzung hatte einen Festgehalt von 72 Gew% und eine Viskosität von 1200 mPa·s (Brookfield 20 UpM, 20°C).

### Beispiel 3:

Analog Beispiel 1 wurde ein Bindemittel hergestellt, zusammengesetzt aus:
50 Gewichtsteilen der Kunststoffdispersion aus Beispiel 1, 37 Gewichtsteilen Dolomit mit einer mittleren Teilchengröße von 10 µm, 0.4 Gewichtsteilen eines Ammoniumsalzes einer Polycarboxylsäure und 0.033 Gewichtsteilen Silikon-Entschäumer. Es wurde ein pH-Wert von 7.0 eingestellt. Die Zusammensetzung hatte einen Festgehalt von 76 Gew% und eine Viskosität von 1320 mPa·s (Brookfield 20 UpM, 20°C).

Herstellung der Tissuelaminate für die Testung der Naßfestigkeit:
Die Bindemittelzusammensetzungen aus den Beispielen 1 bis 3 wurden zur Herstellung von Tissuelaminaten nach folgender Verfahrensweise eingesetzt:
Mit einem 100 mm-Spiralrakel wurde auf ein Silikon-Releasepapier unter Verwendung der Bindemittelzusammensetzung ein Dispersionsfilm gezogen. Zwei Lagen eines Zellwoll-Tissue mit 23 g/m wurden mittels Magnetrakel in die noch nasse Dispersion eingelegt. Anschließend wurde noch eine Minute bei 100°C im Mathistrockner getrocknet. Nach dem Trocknen wurde das Laminat vom Releasepapier abgetrennt. Mittels Fotopresse und Bügeleisen wurde eine Lage des Tissue auf die klebrige Seite des Laminats aufkaschiert.

### Vergleichsbeispiel A:

Es wurde ein dreilagiges Zellwoll-Tissuelaminat verwendet, welches mit einem Plastisol laminiert war (Marktprodukt).

### Testung der Naßfestigkeit:

Die Testung der Naßfestigkeit (Zugfestigkeit) wurde nach DIN 53857 durchgeführt.

Die Laminate wurden vor der Messung im Normalklima ausgelegt (Lufttemperatur 22°C, relative Luftfeuchte 55 %) und noch eine Minute in destilliertem Wasser gelagert. Aus den klimatisierten Laminaten wurden pro Messung je 10 Probestreifen (100 mm Länge, 15 mm Breite), fünf davon quer und fünf davon längs zur Fertigungsrichtung, entnommen. An einer Zugprüfmaschine wurde die Höchstzugkraft (HZK) beim Riß der Laminate bestimmt und jeweils der Mittelwert aus den fünf Einzelprüfungen errechnet.

Die Ergebnisse sind in Tabelle 1 aufgeführt.

**Tabelle 1:**

| Laminat [Beispiel] | Zugfestigkeit | |
|---|---|---|
| | längs [N] | quer [N] |
| 1 | 10.4 | 4.2 |
| 2 | 5.1 | 3.0 |
| 3 | 8.8 | 3.3 |
| A | 4.9 | 2.7 |

## Patentansprüche

1. Verwendung einer wäßrigen Bindemittelzusammensetzung zur Laminierung von zwei oder mehreren Lagen von Cellulose-Tissuegeweben mit einem Flächengewicht von 18 bis 25 g/m, dadurch gekennzeichnet, daß
eine wäßrige Bindemittelzusammensetzung mit einer Viskosität von 600 bis 35000 mPa.s verwendet wird, enthaltend
a) 10 bis 80 Gewichtsteile einer wäßrigen Kunststoffdispersion mit einem Festgehalt von 30 bis 70 Gew% auf der Basis von Polymerisaten eines oder mehrerer Monomeren aus der Gruppe der Acrylsäureester, Methacrylsäureester, Vinylester, Olefine, Vinylhalogenide, Vinylaromaten, ethylenisch ungesättigten Carbonsäuren und deren Amide, welche gegebenenfalls 0 bis 10 Gew%, bezogen auf das Gesamtgewicht des Polymerisats, N-Alkylamide und/oder N-Alkoxyalkylamide ethylenisch ungesättigter Carbonsäuren enthalten,
b) 0.1 bis 300 Gewichtsteile eines organischen oder anorganischen Füllstoffs mit geringer Wasserlöslichkeit und einer mittleren Korngröße von 0.5 bis 100 µm, und
c) 0 bis 4 Gewichtsteile eines Verdickungsmittels und/oder 0 bis 6 Gewichtsteile eines Dispergiermittels.

2. Verwendung nach Anspruch 1, dadurch gekennzeichnet, daß als Komponente a) wäßrige Dispersionen von Vinylacetat-Ethylen-Copolymerisaten, Vinylacetat-Ethylen-N-Methylol(meth)acrylamid-Terpolymerisaten, Alkylacrylat-N-Methylol(meth)acrylamid-Copolymerisaten und VinylacetatEthylen-Alkylacrylat-Mischpolymeriaten oder Vinylacetat-Alkylacrylat-Mischpolymerisaten, die gegebenenfalls einen N-Methylol(meth)acrylamid-Anteil aufweisen, enthalten sind.

3. Verwendung nach Anspruch 1 oder 2,dadurch gekennzeichnet, daß als Komponente a) Vinylacetat-Ethylen-Copolymerisate mit einem Vinylacetat-Gehalt von 60 bis 90 Gew% und einem Ethylengehalt von 10 bis 40 Gew%, bezogen auf das Gesamtgewicht des Copolymerisats, oder Vinylacetat-Ethylen-N-Methylolacrylamid-Terpolymerisate mit einem Vinylacetat-Gehalt von 60 bis 90 Gew%, einem Ethylengehalt von 10 bis 40 Gew% und einem N-Methylolacrylamid-Gehalt von 1 bis 10 Gew%, bezogen auf das Gesamtgewicht des Terpolymerisats, enthalten sind.

4. Verwendung nach Anspruch 1, 2 oder 3, dadurch gekennzeichnet, daß die wäßrigen Kunststoffdispersionen einen Festgehalt von 45 bis 55 Gew% aufweisen.

5. Verwendung nach Anspruch 1, 2, 3 oder 4, dadurch gekennzeichnet, daß der Anteil der Kunststoffdispersion in der Bindemittelzusammensetzung 40 bis 60 Gewichtsteile beträgt.

6. Verwendung nach Anspruch 1, 2, 3, 4 oder 5, dadurch gekennzeichnet, daß als Komponente b) Kreide, Dolomit oder Schwerspat eingesetzt werden.

7. Verwendung nach Anspruch 1, 2, 3, 4, 5 oder 6, dadurch gekennzeichnet, daß als Verdickungsmittel Polyacrylsäuren und deren Salze, lösliche Cellulosederivate wie Hydroxyethylcellulose, Alginate oder Polyurethane eingesetzt werden.

8. Verwendung nach Anspruch 1, 2, 3, 4, 5, 6 oder 7, dadurch gekennzeichnet, daß als Dispergiermittel Kalium-, Natrium- oder Ammoniumsalze von polymeren Carboxylsäuren eingesetzt werden.

## Claims

1. Use of an aqueous binder composition for the lamination of two or more layers of cellulose tissue fabrics having a weight per unit area of 18 to 25 g/m, characterized in that an aqueous binder composition having a viscosity of 600 to 35000 mPa.s is used which comprises
a) 10 to 80 parts by weight of an aqueous plastics dispersion which has a solids content of 30 to 70 % by weight and is based on polymers of one or more monomers from the group consisting of acrylic acid esters, methacrylic acid esters, vinyl esters, olefins, vinyl halides, vinyl-aromatic compounds and ethylenically unsaturated carboxylic acids and their amides, which optionally comprise 0 to 10 % by weight, with respect to the total weight of the polymer, of N-alkylamides and/or N-alkoxyalkylamides of ethylenically unsaturated carboxylic acids,
b) 0.1 to 300 parts by weight of an organic or inorganic filler which is sparingly soluble in water and has an average particle size of 0.5 to 100 µm, and
c) 0 to 4 parts by weight of a thickener and/or 0 to 6 parts by weight of a dispersing agent.

2. Use according to Claim 1, characterized in that aqueous dispersions of vinyl acetate/ethylene copolymers, vinyl acetate/ethylene/N-methylol(meth)acrylamide terpolymers, alkyl acrylate/N-methylol(meth)acrylamide copolymers and vinyl acetate/ethylene/alkyl acrylate copolymers or vinyl acetate/alkyl acrylate copolymers, which optionally have an N-methylol(meth)acrylamide content, are present as component a).

3. Use according to Claim 1 or 2, characterized in that vinyl acetate/ethylene copolymers which have a vinyl acetate content of 60 to 90 % by weight and an ethylene content of 10 to 40 % by weight, with respect to the total weight of the copolymer, or vinyl acetate/ethylene/N-methylolacrylamide terpolymers which have a vinyl acetate content of 60 to 90 % by weight, an ethylene content of 10 to 40 % by weight and an N-methylolacrylamide content of 1 to 10 % by weight, with respect to the total weight of the terpolymer, are present as component a).

4. Use according to Claim 1, 2 or 3, characterized in that the aqueous plastics dispersions have a solids content of 45 to 55 % by weight.

5. Use according to Claim 1, 2, 3 or 4, characterized in that the proportion of plastics dispersion in the binder composition is 40 to 60 parts by weight.

6. Use according to Claim 1, 2, 3, 4 or 5, characterized in that chalk, dolomite or barytes is used as component b).

7. Use according to Claim 1, 2, 3, 4, 5 or 6, characterized in that the thickeners used are polyacrylic acids and their salts, soluble cellulose derivatives, such as hydroxyethylcellulose, alginates or polyurethanes.

8. Use according to Claim 1, 2, 3, 4, 5, 6 or 7, characterized in that the dispersing agents used are potassium, sodium or ammonium salts of polymeric carboxyl acids.

## Revendications

1. Utilisation d'une composition aqueuse de liant pour laminer deux ou plusieurs couches de tissus à base de cellulose avec un poids au mètre carré de 18 à 25 g/m, caractérisée en ce que
l'on utilise une composition aqueuse de liant avec une viscosité de 600 à 35 000 mPa.s, contenant
a) 10 à 80 parties en poids d'une dispersion aqueuse de matières plastiques avec une teneur en matières solides de 30 à 70% en poids, à base de polymères d'un ou de plusieurs monomères choisis dans le groupe des esters acryliques, esters méthacryliques, esters vinyliques, oléfines, halogénures de vinyle, vinyles aromatiques, acides carboxyliques éthyléniquement insaturés et leurs amides qui contiennent facultativement 0 à 10% en poids, sur base du poids total du polymère, de N-alcoylamides et/ou de N-alcoxyalcoylamides des acides carboxyliques éthyléniquement insaturés,
b) 0,1 à 300 parties en poids d'une charge organique ou inorganique avec une faible solubilité dans l'eau et une taille moyenne des particules de 0,5 à 100 µm, et
c) 0 à 4 parties en poids d'un agent épaississant et/ou 0 à 6 parties en poids d'un agent dispersant.

2. Utilisation suivant la revendication 1, caractérisée en ce que l'on utilise comme composants a), des dispersions aqueuses de copolymères acétate de vinyle-éthylène, terpolymères acétate de vinyle-éthylène-N-méthylol(méth)acrylamide, copolymères acrylate d'alcoyle-N-méthylol(méth)acrylamide et copolymères acétate de vinyle-éthylène-acrylate d'alcoyle ou copolymères acétate de vinyle-acrylate d'alcoyle qui présentent facultativement une partie N-méthylol (méth)acrylamide.

3. Utilisation suivant la revendication 1 ou 2, caractérisée en ce que l'on utilise comme composants a), des copolymères acétate de vinyle-éthylène, avec une teneur en acétate de vinyle de 60 à 90% en poids et une teneur en éthylène de 10 à 40% en poids, sur base du poids total du copolymère ou des terpolymères acétate de vinyle-éthylène-N-méthylolacrylamide, avec une teneur en acétate de vinyle de 60 à 90% en poids, une teneur en éthylène de 10 à 40% en poids et une teneur en N-méthylolacrylamide de 1 à 10% en poids, sur base du poids total du terpolymère.

4. Utilisation suivant la revendication 1, 2 ou 3, caractérisée en ce que les dispersions aqueuses de matières plastiques présentent une teneur en matière solide de 45 à 55% en poids.

5. Utilisation suivant la revendication 1, 2, 3 ou 4, caractérisée en ce que la proportion de la dispersion de matières plastiques dans la composition de liant atteint 40 à 60 parties en poids.

6. Utilisation suivant la revendication 1, 2, 3, 4 ou 5, caractérisée en ce que l'on utilise de la craie, de la dolomite ou de la barytine comme composant b).

7. Utilisation suivant la revendication 1, 2, 3, 4, 5 ou 6, caractérisée en ce que l'on utilise des poly(acides acryliques) et leurs sels, des dérivés solubles de la cellulose tels que l'hydroxyéthyl-cellulose, de l'alginate ou un polyuréthanne comme agent épaississant.

8. Utilisation suivant la revendication 1, 2, 3, 4, 5, 6 ou 7, caractérisée en ce que l'on utilise des sels de potassium, de sodium ou d'ammonium d'acides carboxyliques polymères comme agent dispersant.
